# EUROPEAN PATENT APPLICATION

(11) **EP 3 501 445 A1**
(43) Date of publication of application: **26.06.2019**
(21) Application number: 18213954.3
(22) Date of filing: 19.12.2018
(51) Int. Cl.: A61C 5/50

(54) **INSTRUMENT FOR DENTAL USE FOR OBTURATING ROOT CANALS OF TEETH**

(30) Priority: 20.12.2017 IT 201700147560
(71) Applicant: Zaniol, Alex, 31035 Crocetta del Montello (TV) (IT); Zaniol, Terry, 31035 Crocetta del Montello (TV) (IT)
(72) Inventor: Zaniol, Alex, 31035 Crocetta del Montello (Treviso) (IT)
(74) Representative: Ponchiroli, Simone

(57) **Abstract**

Instrument for dental use for obturating root canals (2) of teeth (3), comprising a supporting element (4), with elongate shape along a longitudinal axis (5) which comprises an operating end (6) and a movement end (7), a filling material (8), for in use, obturating the root canals (2) and their branches, the filling material being associated with the supporting element (4) for partly coating it starting from the operating end (6), and manipulating means (9) for manipulating the supporting element (4), which are connected to the movement end (7) of the supporting element (4) for allowing its movement. The supporting element (4) also comprises a first part (11) and a second part (12) which are aligned along the longitudinal axis (5) are separated from each other and reversibly connected by means of a male-female coupling which allows at least a reciprocal rotation of the first part relative to the second part in at least one direction.

## Description

This invention relates to an instrument for dental use for obturating root canals of teeth.

As is known, the obturation of root canals aims to maintain in a healthy condition the periapical tissue of teeth which are subjected to some particularly invasive dental treatments (such as devitalisation).

The success of such endodontic treatments depends on the capacity of the operator to shape the main canal and to cleanse and three-dimensionally obturate the endodontic space. Since after the shaping and cleansing step it is very difficult to achieve complete sterilisation of the canal, obturating remains a crucial step for the success of the entire treatment.

Therefore, obturating the canal is the final step in the endodontic treatment, becoming the sole focus of the operator who, having cleansed the root canals, must precisely seal them. In fact, only in this way will it be possible to prevent bacteria from the outside contaminating the canals and at the same time "wall up" in the tooth any residual bacteria, preventing them from using the nutritional substrates necessary for them to proliferate.

There are various methods for obturating canals. One technique which allows the achievement of a reliable seal for all "ways out" of the root canal is that based on the use of compacted hot gutta-percha.

Gutta-percha is considered the material of choice for obturating canals. The advantages derived from using it can be found in its biological, physical and thermo-mechanical properties. It is a non-toxic, bio-compatible thermoplastic material, able to adapt to the canal walls, stable over time and retractable. Specifically, this invention relates to techniques which use heat-softened gutta-percha borne by a carrier, the best known and most widespread of which is the Thermafil® system.

In fact, in recent years, amongst systems which include heat-softening of gutta-percha, the Thermafil® system has become one of the most predictable and, at the same time, one of the simplest.

Thermafil® obturators consist of a flexible central core made of plastic (the carrier) that is coated with a uniform layer of gutta-percha.

At the time of obturating, after heating the gutta-percha, a carrier of the correct size coated with gutta-percha is inserted all the way into the root canal in order to apply the gutta-percha to the whole canal wall. Once the gutta-percha has solidified again, the carrier is cut off using a burr.

The gutta-percha is hard and crumbly in the solid state, but when it is heated it becomes sticky, shiny and swollen, with greater adhering and flowing capacity.

Ideal canal preparation for obturating with the Thermafil® system must allow easy insertion of the carrier, leaving enough space for the flow of cement and gutta-percha.

In contrast, as regards obturation, if using the Thermafil® system the choice of carrier is the most important decision-making moment to the success of the manoeuvre: the instrument selected must have a geometry which is as close as possible to the shape of the canal prepared, so that the obturating material, when it is subjected to coronal pressure and is lubricated by the cement, can be deployed apically and laterally, thereby obturating along its path lateral and accessory canals, isthmuses and loops.

The simplest way to select the correct Thermafil® obturator is to use special instruments, called verifiers, to determine the optimum working length, so as to allow only the gutta-percha and cement to fill the final apical stretch and to increment the hermetic nature of the seal. However, the position and adjustment of the plastic carrier are usually verified with a periapical radiographic check.

Once heated in the oven to soften the gutta-percha, the Thermafil® obturator is slowly inserted into the canal with small clockwise and anti-clockwise strokes, until it reaches the predetermined length. The obturator must be kept under slight pressure for a predetermined period of time before being cut using a burr at the entrance to the root canal.

The main difficulties in using that technique are encountered when the need arises to use intracanal posts for reconstruction of the tooth. In fact, in those cases in which it is necessary to anchor an intracanal post in the tooth, the "disposable" part of the carrier left near the coronal zone is in the portion of space intended to accommodate the post.

Therefore, in these cases it is necessary to prepare the space intended for anchoring the intracanal post by milling (using known instruments) the carrier and the gutta-percha to the appropriate depth, removing the quantity of material necessary to free up the desired space. This method extends the time needed for the treatment, as well as the difficulties involved in milling a space occupied by heterogeneous materials and the difficulty removing from the root canal all of the debris produced by milling.

In this context, the technical purpose which forms the basis of this invention is to overcome the above-mentioned disadvantages.

In particular, the technical purpose of this invention is to provide an instrument for dental use which allows a reduction in the working times for obturating root canals of teeth at least in cases in which it is necessary to subsequently anchor intracanal posts.

This invention also has for a technical purpose to achieve what is described above at costs which are low and therefore compatible with the market context in which its application would be included.

The technical purpose specified and the aims indicated are substantially achieved by an instrument for dental use as described in the appended claims.

Further features and the advantages of this invention are more apparent in the detailed description below, with reference to several preferred, nonlimiting embodiments of an instrument for dental use, illustrated in the accompanying drawings, in which:
- Figure 1 is a side view, with some parts cut away, of an instrument for dental use according to a first embodiment;
- Figure 2 is an axial section of a detail of an instrument for dental use, according to a second embodiment;
- Figure 3 is an axial section of a detail of an instrument for dental use, according to a third embodiment;
- Figure 4 is an axial section of a part of an instrument for dental use, according to this invention, according to a preferred embodiment; and
- Figure 5 shows the instrument for dental use according to this invention, during a step of use.

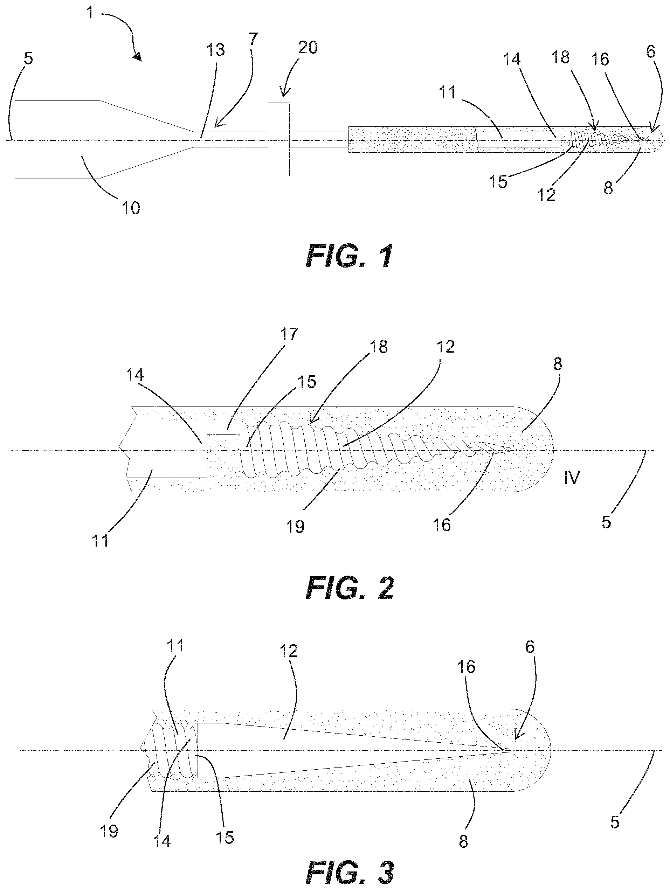

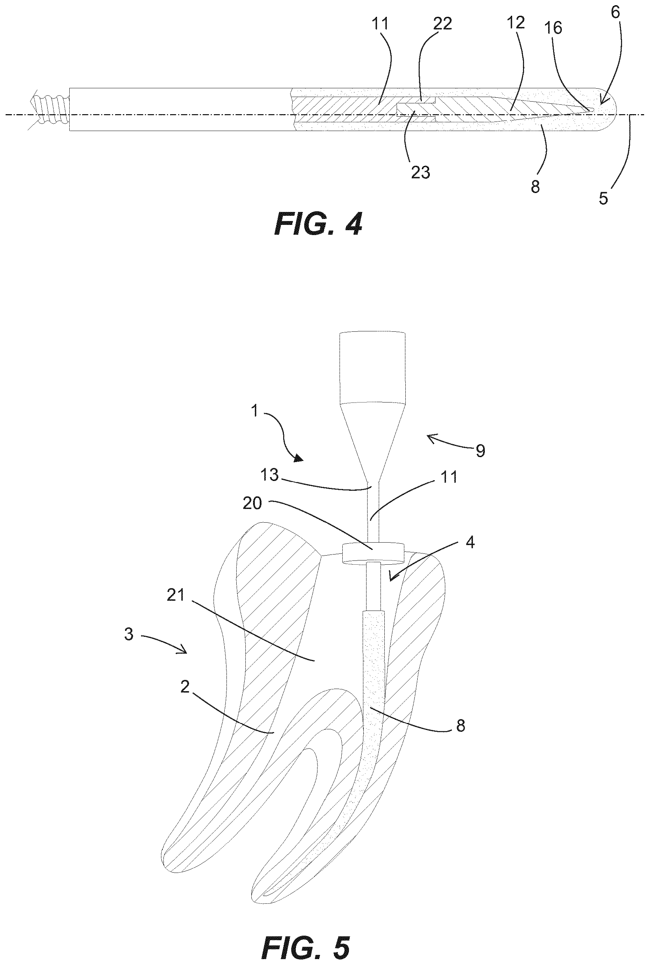

Figures 1 to 3 show embodiments of a dental instrument which is not the subject matter of the appended claims, but which highlight several technical aspects also shared by the embodiment according to this invention, whose distinctive details are visible in Figure 4.

With reference to the above-mentioned figures the numeral 1 denotes in its entirety an instrument for dental use for obturating root canals 2 of teeth 3. As will become apparent from the following description, the instrument 1 according to this invention is externally and in its use very similar to the instrument used in the Thermafil® system, although having significant advantages compared with it.

In its most general embodiment the instrument 1 for dental use according to this invention comprises first a supporting element 4, which has an elongate shape along a longitudinal axis 5 and comprises an operating end 6 and a movement end 7.

Hereinafter when reference is made to longitudinal extensions, this shall be understood to be along the longitudinal axis 5.

Preferably, for a first stretch starting from the movement end 7, the supporting element 4 has a substantially cylindrical shape which then changes, for a second stretch, (travelling along the longitudinal axis 5 in the direction going from the movement end 7 to the operating end 6), into a substantially conical shape with decreasing cross-section.

The taper described above is, in the preferred embodiments, approximately 4% and the diameters of the first stretch may advantageously vary between 0.2 and 1.4 mm. Preferably, in the known way, the various measurements of the supporting element may also be marked using different colours, for example according to ISO standardisation.

The instrument 1 according to this invention also comprises a filling material 8, associated with the supporting element 4, which, in use, has the function of obturating the root canals 2 of the teeth 3 and their branches.

The instrument 1 also comprises manipulating means 9 for manipulating the supporting element 4, which are connected to the movement end 7 of the supporting element 4 and allow its movement. In the preferred embodiments, the manipulating means comprise a grip 10, for example an enlarged head, which, preferably, is made of the same material of which a first part 11 of the supporting element 4 is constituted.

In fact, the supporting element 4 comprises at least one first part 11 and one second part 12. The first part 11 extends longitudinally, has a first length and is equipped with two ends, a first end 13 coinciding with the movement end 7 of the supporting element 4, and a second end 14 opposite to the first end 13. The second part 12 extends longitudinally, has a second length and is also equipped with two ends, a third end 15 and a fourth end 16 opposite to the third end 15 and which coincides with the operating end 6 of the supporting element 4.

In the preferred embodiments, the second length may advantageously be between 3 and 7 mm.

Depending on requirements, the second part 12 may extend either only at the second conical stretch, or also on part of the first cylindrical stretch.

The first part 11 and the second part 12 are aligned one after another along the longitudinal axis 5 and extend along it.

According to the first embodiment illustrated, the first part 11 and the second part 12 are separate from each other and the second end 14 and the third end 15 are facing but spaced from each other with the filling material 8 interposed between them (Figure 1).

Alternatively, according to the embodiment, illustrated in Figure 3, the first part 11 and the second part 12 are separate from each other, with the second end 14 facing and in contact with the third end 15.

According to another embodiment, illustrated in Figure 2, the first part 11 and the second part 12 are in contrast connected to each other by means of a predetermined breaking element 17, which can be constituted of a connecting portion positioned between the second end 14 and the third end 15 and which has a smaller cross-section than the first part 11 and the second part 12. In use, the predetermined breaking element 17 may be made to break by rotating the instrument 1 relative to the longitudinal axis 5 or by pulling the instrument 1 towards the outside of the root canal, once the previously heat-softened filling material 8 has penetrated the canal and the branches and then solidified, gripping the root canal structure and thereby withstanding the relative motion between the instrument 1 and the root canal.

Advantageously, the predetermined breaking element 17 is constituted of the same material as the first part 11 and/or the second part 12.

However, according to the embodiment disclosed by this invention, the first part 11 and the second part 12 are separate from each other but also reversibly connected. For that reason, the second end 14 and the third end 15 define, one a female housing 22, and the other a male projection 23. Advantageously, the projection 23 and the housing 22 are shaped to match each other.

Before use, the projection 23 is inserted into the housing 22 and both the housing 22 and the projection 23 extend parallel to the longitudinal axis 5, preferably along it.

Moreover, the coupling between the male projection 23 and the female housing 22 allows at least a reciprocal rotation of the first 11 relative to the second part 12 and/or an axial translation, and in contrast substantially prevents a reciprocal movement of the first part 11 and of the second part 12 according to a line perpendicular to the longitudinal axis 5.

In the preferred embodiment, in particular, the coupling between the male projection 23 and the female housing 22 allows both a free rotation of the first part 11 relative to the second part 12 and a reciprocal translation of the first part 11 and of the second part 12 away from each other (starting from the coupled configuration). For that purpose, the housing 22 may preferably have a shape that is cylindrical (Figure 4), conical, frustoconical or another shape with axial symmetry relative to a line parallel to the longitudinal axis, but preferably not such that it creates a telescopic connection between the first part 11 and second part 12.

In other embodiments the connection may be a screw connection.

The filling material 8 is advantageously, a thermoplastic material, and entirely coats the second part 12 and at least part of the first part 11. Depending on the embodiments, the filling material 8 may be removable from the support element 4 (while cold, before use) or not (in this case the filling material 8 guarantees a predetermined mechanical connection between the first part 11 and the second part 12 before use or in any case in the presence of relatively small external stresses).

In the preferred embodiments, the filling material 8 is constituted of gutta-percha for endodontic use.

Depending on the embodiments, it may also be the case either that the supporting element 4 has a smooth outer surface, or that at the outer surface it also comprises retaining means 18 for retaining the filling material 8 for, in use, increasing the adherence between the filling material 8 and the supporting element 4 at least longitudinally. For example, the retaining means 18 may comprise a thread 19 as illustrated in Figures 1 and 2 or, as in embodiments not illustrated, other raised elements which project radially relative to the longitudinal axis 5 (for example toroidal elements), or recesses.

Depending on requirements, the retaining means 18, if present, may be located either only on the first part 11 (covering all or part of it), or only on the second part 12 (covering all or part of it), or on both (covering all or part of each one).

In one particularly preferred embodiment illustrated in Figure 3, the first part 11 of the supporting element 4 is equipped with retaining means 18 constituted of a thread 19, whilst the second part 12 has a smooth outer surface.

In some preferred embodiments, the first part 11 and the second part 12 may be constituted of the same material.

In other preferred embodiments, the first part 11 and the second part 12 are constituted of different materials, preferably, the first part 11 is metallic, for example composed of a Ni-Ti alloy, and the second part 12 is composed of a radiopaque plastic material.

Advantageously, the second part 12 is flexible, in such a way that it can easily be inserted, in use, into a root canal 2 with curved extension (Figure 5).

In some particularly preferred embodiments, the first part 11 is less flexible than the second part 12, for in use guaranteeing improved stability and precision during the step of inserting the instrument 1 into the root canal 2. Advantageously, the instrument 1 according to this invention also comprises at least one reference element 20 (such as a ring) movably associated with the supporting element 4, so that it can move along the longitudinal axis 5 between the manipulating means 9 of the instrument 1 and the filling material 8.

As regards use of the instrument 1 for dental use according to this invention, as already indicated, it is similar to that of the prior art instruments used in the Thermafil® system.

It comprises at least three steps, one step of preparing the instrument 1, one step of inserting the instrument 1 into a root canal 2, and one step of extracting the instrument 1 (the step during which the first part 11 is dissociated from the second part 12 and from the filling material 8).

The step of preparing the instrument 1 is entirely similar to that of the prior art instruments and consists of heating the gutta-percha in order to soften it. For example, that can be achieved by inserting the instrument 1 with the filling material 8 joined to it into an oven (of the known type and not illustrated) and, after a predetermined time extracting the instrument 1 from the oven, then the user checking the actual level of heat-softening of the filling material 8.

The step of inserting the instrument 1 is entirely similar to that of the prior art Thermafil® instruments and consists of insertion into a root canal 2 previously prepared, (after possible introduction of small quantities of cement in the canal to reduce the possible risk of over-filling), of the instrument 1 with the heated filling material 8 joined to it. The instrument 1 is slowly introduced into the root canal 2 with small clockwise and anti-clockwise strokes, until the operating end 6 reaches the apex of the root canal. The instrument 1 must them be held under slight pressure for a predetermined time which, advantageously ranges from 8 to 10 seconds so as to allow the filling material 8, softened after the heating, to penetrate the branches of the root canal 2 and to adhere there.

In the known way, confirmation that the operating end 6 has arrived near the apical limit of the canal may be obtained by means of the reference element 20 previously positioned relative to the supporting element 4 in a position such that, in use, the reference element 20 is at a reference point selected by the user on a part of the tooth 3 (for example, the coronal zone) when the operating end 6 is at the apex of the root canal 2 to be obturated.

The reference position in which to place the reference element 20 on the supporting element 4 may be determined in advance, in the known way, for example by using suitable prior art verifier instruments which are not the subject matter of this invention.

Use of the instrument 1 according to this invention differs from the known ones in the extracting step, during which the first part 11 is disengaged from the second part 12 and from the filling material 8.

The step of extracting the instrument 1 is carried out after the elapsing of the above-mentioned time intended to allow the filling material 8 to penetrate the branches of the root canal 2 and to adhere there (as already indicated, the time ranges from 8 to 10 seconds). When that time has elapsed, the user, preferably with a rotary movement relative to the longitudinal axis, or translating movement towards the outside of the root canal 2, or rotating - translating movement with translation towards the outside of the root canal 2, causes disengagement of the first part 11 from the second part 12 and from the filling material 8.

The second part 12 remains fixed to the filling material 8 in turn fixed to the root canal 2.

The step of extracting the first part 11 dissociated from the second part 12 and from the filling material 8, is completed once the user has confirmed the actual disengagement of the first part 11 from the second part 12 and consists of translating the first part 11 relative to the root canal 2 towards the outside of it, leaving the second part 12 and the filling material 8 adhering to the root canal 2 and to its branches.

Removal of the first part 11 leaves free the central part of the root canal 2 in all of the zones nearest the coronal zone 21.

Therefore, the method described allows the obtainment of root canal 2 obturating without parts of the supporting element 4 of the instrument 1 inside the root canal 2 near the coronal zone 21 and avoids the risk of interference between an intracanal post which may be needed and the "disposable" supporting element 4 of the instrument 1 left in the root canal 2. Consequently, in cases in which it is necessary to use an intracanal post, it is possible to avoid the steps of milling the supporting element 4 of the instrument 1, which in contrast are necessary after obturating the root canal 2 with prior art techniques, in order to free up the space intended for anchoring the post.

The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. An instrument for dental use for obturating root canals (2) of teeth (3), comprising:
a supporting element (4), which has an elongate shape along a longitudinal axis (5), said supporting element (4) comprising an operating end (6) and a movement end (7);
a filling material (8), for in use, obturating the root canals (2) and their branches, the filling material being associated with the supporting element (4) for partly coating it starting from the operating end (6); and
manipulating means (9) for manipulating the supporting element (4), which are connected to the movement end (7) of the supporting element (4) for in use, allowing movement of the supporting element (4);
wherein:
said supporting element (4) comprises at least a first part (11) and a second part (12) each extending longitudinally and aligned one after another along the longitudinal axis (5);
said first part (11) comprises a first end (13) coinciding with the movement end (7) of the supporting element (4), and a second end (14), and has a first length;
said second part (12) comprises a third end (15) and a fourth end (16) coinciding with the operating end (6) of the supporting element (4), and has a second length;
said filling material (8) entirely coats the second part (12) and at least partly coats the first part (11);
the first part (11) and the second part (12) are separate and are reversibly connected;
the second end (14) and the third end (15) define, one a female housing (22), and the other a male projection (23), the projection (23) being inserted into the housing (22) and both extending along the longitudinal axis (5); and
the coupling between the male projection (23) and the female housing (22) allows at least a reciprocal rotation of the first part relative to the second part at least in one direction.

2. The instrument for dental use according to claim 1, wherein the coupling between the projection (23) and the housing (22) allows a free rotation of the first part (11) relative to the second part (12) and a reciprocal translation of the first part (11) and of the second part (12) away from each other.

3. The instrument for dental use according to claim 1 or 2, wherein the projection (23) and the housing (22) are shaped to match each other and wherein the housing (22) has a cylindrical, conical, frustoconical or other shape with axial symmetry relative to a line parallel to the longitudinal axis (5).

4. The instrument for dental use according to any of the preceding claims, wherein the filling material (8) is a thermoplastic material.

5. The instrument for dental use according to any of the preceding claims, wherein at least the second part (12) is constituted of a biologically tolerable material.

6. The instrument for dental use according to any of the preceding claims, wherein the manipulating means (9) for manipulating the supporting element (4) comprise a grip (10).

7. The instrument for dental use according to any of the preceding claims, wherein the supporting element (4) comprises retaining means (18) for retaining the filling material (8).

8. The instrument for dental use according to claim 7, wherein the retaining means (18) for retaining the filling material (8) comprise a thread (19) or one or more raised elements which project from the supporting element (4) radially relative to the longitudinal axis.

9. The instrument for dental use according to any of the preceding claims, wherein at least said second part (12) is flexible, so that, in use, it can be inserted into a root canal.

10. The instrument for dental use according to claim 9, wherein the first part (11) is less flexible than the second part (12).

11. The instrument for dental use according to any of the preceding claims, also comprising at least one reference element (20) movably associated with the supporting element (4) so that it can move along the longitudinal axis (5) between the movement means and the filling means.

12. The instrument for dental use according to any of the preceding claims, wherein said first part (11) and second part (12) are constituted of different materials.

13. The instrument for dental use according to claim 12, wherein the first part (11) is metallic and the second part (12) is composed of a radiopaque plastic material.

14. The instrument for dental use according to any of the preceding claims, wherein the second part (12) has a length of between 3 and 7 mm along the longitudinal axis.

15. An instrument for dental use for obturating root canals (2) of teeth (3), comprising:
a supporting element (4), which has an elongate shape along a longitudinal axis (5), said supporting element (4) comprising an operating end (6) and a movement end (7), and at least a first part (11) and a second part (12) each extending longitudinally and aligned one after another along the longitudinal axis (5);
a filling material (8), for in use, obturating the root canals (2) and their branches, the filling material being associated with the supporting element (4) for partly coating it starting from the operating end (6), said filling material (8) entirely coating the second part (12) and at least partly coating the first part (11) and adhering to them;
manipulating means (9) for manipulating the supporting element (4), which are connected to the movement end (7) of the supporting element (4) for in use, allowing movement of the supporting element (4);
wherein:
the first part (11) comprises a first end (13) coinciding with the movement end (7) of the supporting element (4), and a second end (14), and has a first length;
the second part (12) comprises a third end (15) and a fourth end (16) coinciding with the operating end (6) of the supporting element (4), and has a second length;
the first part (11) and the second part (12) are separate and reversibly connected by means of a coupling which allows a free rotation of the first part (11) relative to the second part (12) and a reciprocal translation of the first part (11) and of the second part (12) away from each other, and substantially prevents a reciprocal movement of the first part (11) and of the second part (12) according to a line perpendicular to the longitudinal axis (5); and
the second end (14) and the third end (15) define, one a female housing (22), and the other a male projection (23), the projection (23) being inserted into the housing (22) and both extending along the longitudinal axis (5).
